# EUROPÄISCHE PATENTSCHRIFT

(11) **EP 1 093 037 B1**
(45) Veröffentlichungstag und Bekanntmachung des Hinweises auf die Patenterteilung: **30.08.2006**
(21) Anmeldenummer: 00120965.9
(22) Anmeldetag: 27.09.2000
(51) Int. Cl.: G05B 19/042

(54) **Verfahren und Vorrichtung zur Steuerung von Vorgängen in einem Fahrzeug**
Process and device for the control of processes in a vehicle
Méthode et dispositif pour commander des procédés dans un véhicule

(30) Priorität: 11.10.1999 DE 19949051
(43) Veröffentlichungstag der Anmeldung: 18.04.2001
(73) Patentinhaber: ROBERT BOSCH GMBH, 70442 Stuttgart (DE)
(72) Erfinder: Sommer, Rainer, 70499 Stuttgart (DE); Gieseler, Steffen, 71739 Oberriexingen (DE); Ege, Taskin, 71732 Tamm (DE)

(56) Entgegenhaltungen:
- DE-A- 4 129 809
- US-A- 5 875 472

## Beschreibung

### Stand der Technik

Die Erfindung betrifft Verfahren und Vorrichtung zur Steuerung von Vorgängen in einem Fahrzeug, wobei wenigstens zwei Prozessoren auf wenigstens ein Speichermittel zugreifen, gemäß den Oberbegriffen der unabhängigen Ansprüche.

Dazu zeigt die DE 41 29 809 A1 ein Mehrrechnersystem, insbesondere zur Steuerung von Vorgängen in Kraftfahrzeugen. Dabei greifen wenigstens zwei Rechner gemeinsam auf ein Speichermittel zu. Um bei mehreren Rechnern die Sicherheit der Datenübertragung bei Zugriff auf den gleichen Speicher zu gewährleisten und Verzögerungen durch den Datenaustausch zwischen den Rechnern zu minimieren, wird das Speichermittel in wenigstens zwei Bereiche unterteilt. Auf den ersten Speicherbereich greift ein erster Rechner nur lesend und ein zweiter Rechner nur schreibend zu. Auf den zweiten Speicherbereich greift der zweite Rechner nur lesend und der erste Rechner nur schreibend zu. Dabei sind die Rechner so synchronisiert, daß sie zum gleichen Zeitpunkt in der gleichen Weise auf das Speichermittel zugreifen. Da nun beide Rechner entweder lesend oder schreibend auf entkoppelte Speicherbereiche zugreifen, wird eine Kollision, also ein Lese- bzw. Schreibzugriff auf die gleiche Adresse in dem Speichermittel verhindert. Durch diese Synchronisation kann es allerdings zu unerwünschten Wartezeiten in der Programmabarbeitung kommen.

So zeigt sich, daß der Stand der Technik nicht in jeder Hinsicht optimale Ergebnisse zu liefern vermag.

Damit stellt sich die Aufgage bei wenigstens zwei, insbesondere unabhängig voneinander arbeitenden Prozessoren, welche auf ein Speichermittel zugreifen, asynchronen Datentransfer und möglichst hohen Datendurchsatz zu erzielen und die Erkennung und Vermeidung von Kollisionen bei gleichzeitigem Lese- und/oder Schreibzugriff zu optimieren.

### Vorteile der Erfindung

Die Erfindung geht von einem Verfahren und einer Vorrichtung zur Steuerung von Vorgängen in einem Fahrzeug aus, wobei wenigstens zwei Prozessoren auf wenigstens ein Speichermittel zugreifen und ein gleichzeitiger Lese- und/oder Schreibzugriff bei wenigstens zwei Prozessoren auf die gleiche Adresse des Speichermittels in einer Programmabarbeitung verhindert wird. Vorteilhafterweise wird vor dem eigentlichen Lese- und/oder Schreibzugriff durch einen Adreßvergleich erkannt, daß die wenigstens zwei Prozessoren auf die gleiche Adresse zugreifen werden.

Zweckmäßigerweise wird abhängig von dem Adreßvergleich ein erstes Signal an den ersten Prozessor und ein zweites Signal an einen zweiten Prozessor übermittelt und die Programmabarbeitung wenigstens eines der wenigstens zwei Prozessoren durch das jeweilige Signal unterbunden.

Vorteilhafterweise wird dadurch, daß die Programmabarbeitung des wenigstens ersten der wenigstens zwei Rechner durch das jeweilige Signal solange unterbunden wird, bis im Adreßvergleich wieder verschiedene Adressen erkannt werden und/oder der Lese- und/oder Schreibzugriff des wenigstens zweiten Prozessors beendet ist, der Zugriff der wenigstens zwei Prozessoren auf das wenigstens eine Speichermittel zeitlich entkoppelt.

In einer vorteilhaften Ausgestaltung wird die Programmabarbeitung wenigstens eines der wenigstens zwei Prozessoren durch das jeweilige Signal für eine vorgebbare und/oder aus dem Adreßvergleich ermittelbare Zeit unterbunden.

Weiterhin von Vorteil ist, daß die Lese- und/oder Schreibzugriffe der wenigstens zwei Prozessoren auf Adressen des wenigstens einen Speichermittels asynchron, also zu beliebigen Zeitpunkten erfolgen können.

Dabei dient zweckmäßigerweise als Kriterium bei gleichzeitigem oder nahezu gleichzeitigen Zugriff auf die gleiche Adresse um festzustellen welcher Prozessor in seiner Programmabarbeitung unterbunden werden soll, die Tatsache welcher Prozessor zuerst den Zugriff gestartet hat bzw. durch welchen Prozessor die Adresse zuerst übermittelt wurde.

Dadurch wird vorteilhafter Weise vermieden, daß der gelesene Inhalt unter einer Adresse ungültig ist.

Damit ergibt sich ein Kostenvorteil einmal gegenüber dem Einsatz synchroner Speichermittel bzw. eine den Zugriff synchronisierenden Einrichtung und zum anderen gegenüber dem Einsatz aufwendiger Hardwareschaltungen, wie z.B. zusätzlicher Register (Hardware-Semaphores) zur Kollisionsvermeidung.

Dadurch, daß beide Teilsysteme, insbesondere beide Prozessoren asynchron also mit voller Perfomance arbeiten und Informationen austauschen, können höhere Datendurchsätze erzielt werden. Die Prozessoren arbeiten unabhängig und greifen zu beliebigen Zeitpunkten auf das gemeinsame Speichermittel zu. Selbstverständlich kann die Erfindung auch in einem synchronisierten Betrieb der wenigstens zwei Prozessoren Verwendung finden.

Ebenso wird zweckmäßiger Weise eine zusätzliche Interrupt- bzw. Interuptbearbeitungsbelastung in Folge einer Rechnerkopplung, also einer Kopplung beider Prozessoren vermieden.

Vorteilhafterweise ist die Mehrbelastung für die Laufzeit sehr gering, da nur im drohenden Konfliktfall eine zeitliche Zugriffsentkopplung erfolgt, was aber selten vorkommt. Dadurch wird die höchstmögliche Aktualität der Daten im Speicher gewährleistet.

Weitere Vorteile und vorteilhafte Ausgestaltungen ergeben sich aus der Beschreibung und den Ansprüchen.

### Zeichnung

Die Erfindung wird im weiteren anhand der in der Zeichnung dargestellten Figuren näher erläutert.

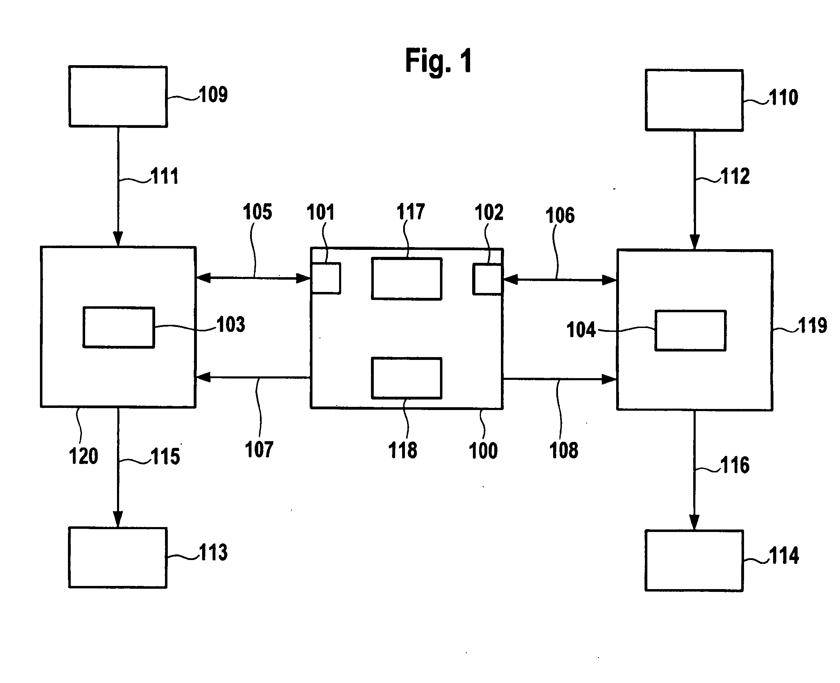

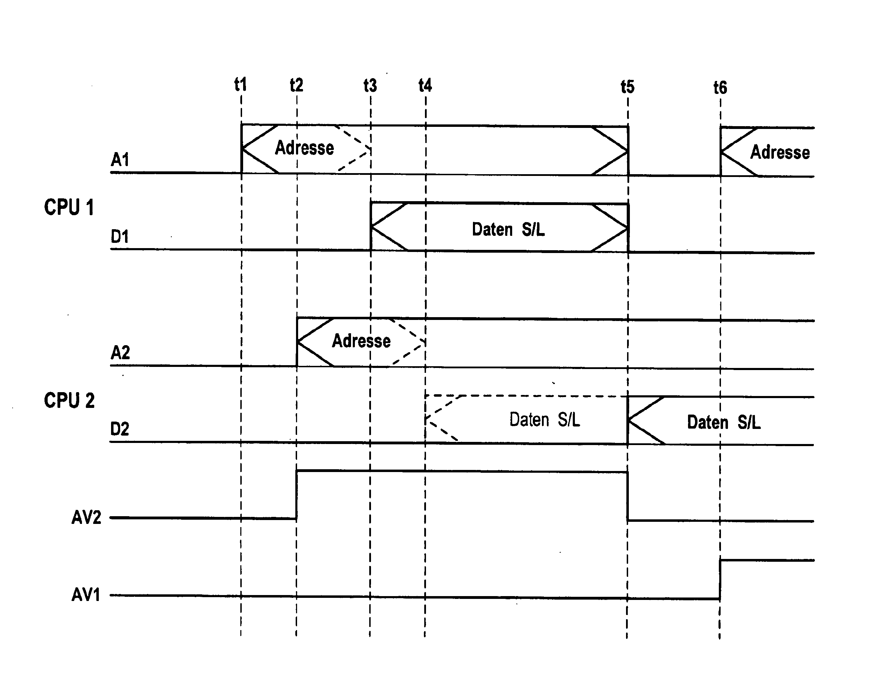

Figur 1 zeigt dabei schematisch ein System mit wenigstens zwei Prozessoren, die auf ein Speichermittel zugreifen. Anhand des Signalverlaufs der Prozessoren und eines Vergleichsmittels um die Programmabarbeitung in wenigstens einem Prozessor zu unterbinden, wird der erfindungsgemäße Gedanke in Figur 2 erläutert.

### Beschreibung der Ausführungsbeispiele

Figur 1 zeigt ein System zur Steuerung von Vorgängen bzw. Prozessen in einem Fahrzeug. Mit 119 ist dabei ein erstes Teilsystem, insbesondere eine Steuereinheit 119 mit einem Prozessor 104, insbesondere einer CPU dargestellt. Dabei werden gemessene oder anderweitig ermittelte Betriebsgrößen aus einem Element 110, welches einer Meßeinrichtung, einer weiteren Steuereinheit, usw. entspricht über Schnittstelle 112 dem Teilsystem 119 zugeführt. Diese Signale die über die Schnittstelle 112 übertragen werden, entsprechen somit gemessenen Betriebsgrößen bzw. können aus diesen Signalen solche Betriebsgrößen abgeleitet werden. In Abhängigkeit der Eingangssignale, daraus abgeleiteter Betriebsgrößen und/oder interner Größen bildet die Prozessoreinheit 104 im Rahmen der in wenigstens einem Speicher implementierten Programme bzw. Steuerfunktionen in Form vom Programmcode, Werte für die auszugebenden Steuergrößen, welche Stellelemente, insbesondere dargestellt durch Element 114, im Sinne einer vorgegebenen Steuer- bzw. Regelstrategie einstellen. Die dabei zu steuernden Vorgänge sind dabei beispielsweise Teil einer Getriebesteuerung, Steuerung des Fahrwerks (ABS, ASR, ESP usw.), insbesondere der Bremse, Steuerung von Komfort- und Sicherheitselektronik, Steuerung einer Antriebseinheit, insbesondere einer Brennkraftmaschine, Steuerung des Triebstrangs, oder sonstige im Fahrzeug enthaltene Steuervorgänge.

Bei Teilsystem 119 ebenso wie Teilsystem 120 handelt es sich bevorzugterweise um eine Steuereinheit zur Steuerung einer Antriebseinheit, insbesondere einer Brennkraftmaschine eines Fahrzeugs. Dabei werden nun Signale welche gemessenen Betriebsgrößen der Antriebseinheit, des Triebstrangs und/oder des Fahrzeugs entsprechen oder aus welchen solche Betriebsgrößen abgeleitet werden können, aus den Elementen 109 und 110, insbesondere Meßelementen oder weiteren Steuereinheiten über die Schnittstelle 111 bzw. 112 den Teilsystemen 119 und 120 zugeführt.

Diese Teilsysteme können einerseits lediglich den Prozessoreinheiten bzw. Prozessoren 103 und 104 entsprechen oder weitere Elemente wie beispielsweise Speicherelemente, insbesondere einen Programmspeicher, weitere Schnittstellen oder ähnliches enthalten. Die Prozessoren 103 und 104 bzw. die Teilsysteme 119 und 120 können dabei in einem Steuergerät ebenso untergerbracht sein, wie sie auf verschieden Steuergeräte verteilt sein können.

Die durch die Elemente 109 und 110 zugeführten Signal bzw. die Betriebsgrößen sind insbesondere solche Betriebsgrößen, die zur Steuerung einer Antriebseinheit, insbesondere einer Brennkraftmaschine ausgewertet werden können. Über die Schnittstellen 115 bzw. 116 werden ferner Signale ausgegeben, welche Stellelemente bzw. Aktuatoren zur Einstellung wenigstens einer Betriebsgröße des Fahrzeugs, insbesondere einer Antriebseinheit betätigen. In Abhängigkeit der Eingangssignale, daraus abgeleiteter Betriebsgrößen und/oder interner Größen bildet die jeweilige Prozessoreinheit 104 bzw. 103 somit gemäß einer Steuer- bzw. Regelstrategie die Steuergrößen für die Stellelemente 113 bzw. 114. Beispielsweise wird in bekannter Weise die Stellung eines vom Fahrer betätigbaren Bedienelementes erfaßt, ausgewertet und ein Sollwert für ein Drehmoment der Antriebseinheit ermittelt. Dies führt dann unter Berücksichtigung der über die Schnittstellen 111 bzw. 112 empfangenen Sollwerte beispielsweise anderer Steuersysteme, wie einer Antriebsschlupfregelung, einer Getriebesteuerung, usw. sowie intern gebildeter Sollwerte (Begrenzungen etc.) zur Ermittlung eines Sollwertes z.B. für das Drehmoment. Dieses wird dann in bevorzugten Ausführungsbeispiel einer Brennkraftmaschinensteuerung in einen Sollwert für die Stellung der Drosselklappe, der im Rahmen eines Lagerregelkreises eingestellt wird, umgewandelt. Ferner sind je nach Ausstattung der Brennkraftmaschine weitere leistungsbestimmende Funktionen vorgesehen, beispielsweise Steuerung eines Turboladers, einer Abgasrückführung, einer Lehrlaufdrehzahlregelung, usw.

Darüber hinaus sind bei Brennkraftmaschine mit Benzindirekteinspritzung nicht nur die Lufteinstellung sondern auch die Bestimmung der einzuspritzenden Kraftstoffmasse, die Bestimmung eines einzustellenden Luft/Kraftstoffverhältnisses, die Vorgabe des Einspritzverlaufes (Voreinspritzung, Nacheinspritzung), die Steuerung einer Ladungsbewegungsklappe, usw. leistungsbestimmend, so daß dort neben den geschilderten eine Vielzahl weiterer Programme bzw. Steuerfunktionen vorzusehen sind, die Einfluß auf die Leistung der Brennkraftmaschinen somit auf die Sicherheit des Fahrzeugs haben.

Die dazu benötigten Programme können einmal in, in den Teilsystemen 119 bzw. 120 enthaltenen Programmspeichern untergebracht sein, oder in einem zentralen Speicher 100. Ebenso können Daten entweder in den Teilsystemen selbst, also in 119 bzw. 120 in Speicherelementen abgelegt sein oder in einem gemeinsamen Speicherelement 100. Sind Programme und/oder Daten in einem zentralen Speicherelement 100 abgelegt, so greifen beide Teilsysteme bzw. insbesondere Prozessoren 103 bzw. 104 auf dieses zentrale Speicherelement 100 zu. Dies geschieht über die Ports 101 und 102 mittels der Schnittstellen 105 und 106. Über die Schnittstellen 105 bzw. 106 wird somit durch die Prozessoren 103 und 104 in Speicherelement 100 geschrieben sowie aus diesen ausgelesen. Die bidirektionale Übertragung der Information kann dabei seriell ebenso wie parallel erfolgen. Die parallele Übertragung der Information hat dabei den Vorteil, daß für einen Adreßvergleich die jeweilige Adresse sehr schnell zur Verfügung steht.

Das Speicherelement 100 kann dabei ein Dual-Port-RAM zur Kopplung zwischen den Prozessoren sein oder auch beispielsweise als ein übliches, also Single-Port-RAM mit einem vorgeschalteten Multiplexer ausgebildet sein. Prinzipiell können aber beliebige flüchtige oder nichtflüchtige Speicher dabei Verwendung finden.

Bei einem normalen flüchtigen Speicher, wenn dann also jeder Prozessor z.B. in der Hälfte der Zeit zugreifen kann, teilen sich beide den Speicher ohne Zugriffsprobleme. Dies bedeutet allerdings Einschränkungen in der Performance.

Im Speicherelement 100 ist ein Adreßvergleicher 117 enthalten. Die Adreßvergleicherschaltung 117 dient dabei zur Erkennung des Falles, wenn die beiden Prozessoren 103 und 104 auf die gleiche Adresse zugreifen. Dabei werden die beiden Adressen über Port 101 bzw. 102 beispielsweise über eine Komperatoranordnung verglichen und abhängig vom Ergebnis des Vergleiches Signale an die Prozessoren 103 bzw. 104 übermittelt. Diese Signale werden über Schnittstellen 107 bzw. 108 übertragen. Im einfachsten Fall wird über die Schnittstelle 107 bzw. 108 ein Stopsignal an den anzuhaltenden Prozessor übertragen.

Element 118 dient dabei dazu, die Koordination durchzuführen, welcher Prozessor anzuhalten ist, also an welchen Prozessor welches Signal zu übertragen ist. Diese Koordinationsschaltung 118 ist dabei sinnvoller Weise ebenfalls im Speicherelement 100 bzw. mit diesem zusammen in einem Bauteil untergebracht. Somit wird im einfachsten Fall über den Adreßvergleich im Adreßvergleicher 117 festgestellt, daß die beiden Prozessoren 103 und 104 auf eine identische Adresse zugreifen wollen. Der Zugriff muß dabei nicht absolut zeitgleich erfolgen. Zeitgleichheit bedeutet in diesem Fall auch innerhalb eines bestimmten, vorgebbaren Zeitfensters. Dabei sind mehrere Varianten möglich. Einmal kann mit dem Senden der Daten im Anschluß an die Adreßübertragung solange gewartet werden, bis die Adresse des zweiten Prozessors vollständig mit der ersten verglichen ist. Dies hat allerdings den Nachteil, daß dabei Wartezeiten entstehen. Eine weitere Möglichkeit ist, bei Anlegen einer Adresse lediglich festzustellen, ob der jeweils andere Prozessor ebenfalls einen Zugriff plant. Liegt bereits eine Adresse durch den jeweils anderen Prozessor an, wird dann zunächst die Adresse verglichen, bevor der zweite mit dem Zugriff beginnen darf. Liegt bei Adreßsendung keine weitere Adresse des jeweils anderen Prozessors vor, wird automatisch nach Übertragung der vollständigen Adresse mit dem Schreib- /Lesezugriff des zuerst zugreifenden Prozessors begonnen. Diese Überprüfungen werden in der Vergleichsschaltung 117 durchgeführt.

In einem Beispiel kann somit mit Speicherelement 100 ein DPRAM zur Kopplung zwischen den Mikroprozessoren eingesetzt werden, wobei die Signale des DPRAMS dann ohne Zusatzhardware zu den Prozessoren geführt werden und dazu verwendet werden, den drohenden Konfliktfall den quasi gleichzeitigen Zugriff auf die gleiche DPRAM-Speicherzelle automatisch zeitlich zu entkoppeln. Dabei wird wenigstens ein Prozessor vorläufig angehalten bzw. die Programmabarbeitung durch diesen Prozessor unterbunden.

Damit erfolgt im Prinzip der schreibende und lesende Zugriff auf Daten in dem DPRAM in dem Mikroprozessor an beliebiger Stelle im Programmablauf ohne jede Einschränkung oder Zusatzmaßnahme in der Software.

Im einfachsten Fall wird durch die Koordinationsschaltung 118 ein einfaches Signal ausgegeben. Für die Bildung der Signale insbesondere in Form von Flags oder längeren Botschaften können je nach Ausführung die Adressen, Chip-Enable-Signale, Output-Enable-Signale, Read- und Write-Signale der beiden Ports 101 und 102 einzeln oder in Kombination in der Koordinationslogik 118 zur Bildung der Signale über Schnittstellen 107 und 108 herangezogen werden.

Der erfindungsgemäße Gedanke ist an einem Beispiel in Figur 2 in Form eines Signalflußplans nochmals dargestellt. Zum Zeitpunkt t1 beginnt Prozessor 103, also hier CPU1 mit der Übertragung der Zugriffsadresse. Es wird also ein Signal A1 über Schnittstelle 105 und Port 101 zu Speicherelement 100 übertragen. Zum Zeitpunkt t2 beginnt Prozessor 104 hier als CPU2 bezeichnet mit der Übertragung einer Adresse für einen Schreib- /Lesezugriff. Das zugehörige Signal wird hier mit A2 bezeichnet. In der Vergleichsschaltung 117 wird damit zum Zeitpunkt t2 festgestellt, daß gleichzeitig auf zwei Adressen, möglicherweise gleiche Adressen zugegriffen wird. Im Adreßvergleicher wird somit zum Zeitpunkt t2 ein Signal AV2 initiiert.

Da zum Zeitpunkt t1 keine weitere Adresse anlag, wird zum Zeitpunkt t3 durch Prozessor 103, also CPU1 im Anschluß an die vollständige Übertragung der Adresse, also Signal A1 mit dem Schreib-/Lesezugriff (S/L) obiger Adresse begonnen. Gleichzeitig wird ein zweites Signal AV1 gebildet, welches für den jeweils anderen Prozessor bestimmt ist. Zum Zeitpunkt t4 hat Prozessor 104, also CPU2 die Adresse also Signal A2 vollständig übertragen und würde mit dem Schreib-/Lesezugriff, also Signal D2 auf Speicherelement 100 beginnen. Wird im Adreßvergleicher 117 festgestellt, daß die beiden Adressen also Signal A1 und A2 gleich sind, wird Signal AV2 durch die Koordinierungsschaltung 118 auf CPU2 also Prozessor 104 ausgegeben. Dadurch wird der Zugriff auf die Speicherstelle unterbunden. Gleichzeitig wird AV1 über Schnittstelle 108 beim Prozessor 103, also CPU1 ausgegeben, was den weiteren Zugriff ermöglicht.

Zum Zeitpunkt t5 ist der Zugriff durch CPU1 also Prozessor 103 beendet. Bis zu diesem Zeitpunkt t5 liegt die gewünschte Adresse, also Signal A1 vor. Ebenso wird die Adresse der CPU2, also Prozessor 104 weiterhin aufrechterhalten. Zum Zeitpunkt t5 ergibt der Adreßvergleich somit das nicht mehr die gleichen Adressen bezüglich des Zugriffs anliegen bzw. der Zugriff durch CPU1, Prozessor 103 beendet ist. Das Signal AV2 für CPU2 fällt damit ab. Somit wird zum Zeitpunkt t5 mit dem Zugriff S/L, also Signal D2 auf die gewünschte Adresse begonnen.

Zum Zeitpunkt t6 will CPU1 beispielsweise wieder auf die gleiche Adresse zugreifen. Da aber nun CPU2 sich gerade im Zugriff S/L auf diese Adresse befindet, wird das Signal AV1 gesetzt und an CPU1 sprich Prozessor 103 über Leitung 107 durch die Koordinationsschaltung 118 ausgegeben. Dadurch wird der Zugriff durch Prozessor 103, also CPU1 seinerseits unterbunden.

Statt der Übertragung zweier Signale AV2 und AV1 bzw. daraus abgeleiteter Informationen an die beiden Prozessoren könnte auch nur ein als Stoppsignal interpretierbares Signal AV gebildet werden, welches je nachdem durch Koordinationsschaltung 118 dem einen oder anderen Prozessor zugeleitet wird. Durch dieses Signal wird der jeweilige Prozessor, insbesondere der, der zu spät, bei zwei Prozessoren also als zweites auf die gleiche Adresse zugreift, gestoppt bzw. die Programmabarbeitung solange unterbunden, bis die Zugriffskollision nicht mehr auftritt.

Somit ist der Vorteil der Erfindung insbesondere, daß beide Teilsysteme 119 und 120 bzw. die Prozessoren 104 und 103 asynchron und damit quasi mit voller Performance arbeiten und Informationen austauschen können. Es gibt nur dann eine Rückwirkung von einem Teilsystem auf das andere, wenn beide gleichzeitig die gleiche Zelle im Speicherelement, insbesondere in einem Dual-Port-RAM, ansprechen wollen und damit ein Prozessor kurz angehalten wird, um die Kollision zu vermeiden. Da dies nur selten vorkommt, ist die Performance Einschränkung durch das Verfahren und die Vorrichtung zu vernachlässigen.

Statt eines DPRAMs ist auch ein Speichermittel mit mehr als zwei gleichzeitigen Zugriffsmöglichkeiten erfindungsgemäß einsetzbar, insbesondere ein Quadropol-RAM, also ein flüchtiger Speicher mit hier speziell vier gleichzeitigen Zugriffsmöglichkeiten durch z.B. zwei oder vier Prozessoren.

## Patentansprüche

1. Verfahren zur Steuerung von Vorgängen in einem Fahrzeug, wobei wenigstens zwei Prozessoren (103, 104) auf wenigstens ein Speichermittel zugreifen und ein gleichzeitiger Lese- und/oder Schreibzugriff der wenigstens zwei Prozessoren auf die gleiche Adresse des Speichermittels einer Programmabarbeitung verhindert wird, **dadurch gekennzeichnet, daß** durch einen Adreßvergleich die gleiche Adresse erkannt wird und abhängig von dem Adreßvergleich wenigstens ein Signal an wenigstens einen Prozessor übermittelt wird und die Programmabarbeitung des wenigstens einen Prozessors durch das Signal unterbunden wird.

2. Verfahren nach Anspruch 1, **dadurch gekennzeichnet, daß** an einen ersten Prozessor ein erstes Signal und an einen zweiten Prozessor ein zweites Signal übermittelt wird und die Programmabarbeitung wenigstens eines Prozessors durch das Signal unterbunden wird.

3. Verfahren nach Anspruch 1, **dadurch gekennzeichnet, daß** die Programmabarbeitung des wenigstens einen der wenigstens zwei Prozessoren durch das jeweilige Signal solange unterbunden wird, bis im Adreßvergleich wieder verschiedene Adressen erkannt werden und/oder der Lese- und/oder Schreibzugriff des wenigstens zweiten Prozessors beendet ist.

4. Verfahren nach Anspruch 1, **dadurch gekennzeichnet, daß** die Programmabarbeitung wenigstens eines der wenigstens zwei Prozessoren durch das jeweilige Signal für eine vorgebbare und/oder aus dem Adreßvergleich ermittelbare Zeit unterbunden wird.

5. Verfahren nach Anspruch 1, **dadurch gekennzeichnet, daß** die Lese- und/oder Schreibzugriffe auf Adressen des Speichermittels in einer Programmabarbeitung wenigstens zweier Prozessoren asynchron, also zu beliebigen Zeitpunkten erfolgen.

6. Verfahren nach Anspruch 1 und 2, **dadurch gekennzeichnet, daß** die Programmabarbeitung des wenigstens zweiten Prozessors unterbunden wird, wenn der Lese- und/oder Schreibzugriff des ersten Prozessors auf die gleiche Adresse zeitgleich vor dem Lese- und/oder Schreibzugriff des zweiten Prozessors an Hand des Adressvergleiches festgestellt wurde.

7. Vorrichtung zur Steuerung von Vorgängen in einem Fahrzeug, mit wenigstens zwei Prozessoren (103, 104) und wenigstens einem Speichermittel (100), wobei die wenigstens zwei Prozessoren auf das wenigstens eine Speichermittel zugreifen und ein gleichzeitiger Lese- und/oder Schreibzugriff der wenigstens zwei Prozessoren auf die gleiche Adresse des Speichermittels in einer Programmabarbeitung verhindert wird, **dadurch gekennzeichnet, daß** erste Mittel (117) enthalten sind, welche durch einen Adressvergleich die gleiche Adresse erkennen und zweite Mittel (118) enthalten sind, die abhängig von dem Adressvergleich ein erstes Signal an den ersten Prozessor und ein zweites Signal an den zweiten Prozessor übermitteln, und die Programmabarbeitung wenigstens eines der wenigstens zwei Prozessoren durch das jeweilige Signal unterbinden.

## Claims

1. Method for controlling processes in a vehicle, at least two processors (103, 104) accessing at least one storage means and a simultaneous reading and/or writing access by the at least two processors to the same address of the storage means in a program processing operation being prevented, **characterized in that** the same address is recognized by an address comparison and at least one signal is transmitted to at least one processor as a function of the address comparison and the program processing operation of the at least one processor is prohibited by the signal.

2. Method according to Claim 1, **characterized in that** a first signal is transmitted to a first processor, and a second signal is transmitted to a second processor, and the program processing operation of at least one processor is prohibited by the signal.

3. Method according to Claim 1, **characterized in that** the program processing of the at least one of the at least two processors is prohibited by the respective signal until various addresses in the address comparison are recognized again and/or the reading and/or writing access of the at least second processor is ended.

4. Method according to Claim 1, **characterized in that** the program processing operation by at least one of the at least two processors is prohibited by the respective signal for a predefinable time and/or a time which can be determined from the address comparison.

5. Method according to Claim 1, **characterized in that** the reading and/or writing access to addresses of the storage means in a program processing operation of at least two processors are asynchronous, that is to say take place at any times.

6. Method according to Claims 1 and 2, **characterized in that** the program processing operation of the at least second processor is prohibited if the reading and/or writing access by the first processor to the same address has been detected simultaneously before the reading and/or writing access of the second processor by reference to the address comparison.

7. Device for controlling processes in a vehicle, having at least two processors (103, 104) and at least one storage means (100), the at least two processors accessing the at least one storage means and a simultaneous reading and/or writing access by the at least two processors to the same address of the storage means in a program processing operation being prevented, **characterized in that** the device contains first means (117) which recognize the same address by an address comparison, and contains second means (118) which, as a function of the address comparison, transmit a first signal to the first processor and a second signal to the second processor and prohibit the program processing operation of at least one of the at least two processors by means of the respective signal.

## Revendications

1. Procédé de commande d'opérations dans un véhicule, selon lequel au moins deux processeurs (103, 104) accèdent à au moins un moyen de mémoire, en empêchant un accès en lecture et/ou en écriture simultané des processeurs à la même adresse du moyen de mémoire pendant une exécution de programme,
**caractérisé en ce qu'**
on reconnaît la même adresse par comparaison d'adresses, et on transmet au moins un signal en fonction de la comparaison d'adresses à au moins un processeur, le signal bloquant l'exécution du programme du processeur.

2. Procédé selon la revendication 1,
**caractérisé en ce qu'**
on transmet un premier signal à un premier processeur et un deuxième signal à un deuxième processeur, et le signal bloque l'exécution du programme d'au moins un processeur.

3. Procédé selon la revendication 1,
**caractérisé en ce que**
l'exécution du programme d'au moins l'un des au moins deux processeurs est bloquée par le signal respectif jusqu'à ce que des adresses différentes soient à nouveau reconnues lors de la comparaison d'adresses et/ou l'accès en lecture et/ou en écriture de l'au moins un deuxième processeur soit terminé.

4. Procédé selon la revendication 1,
**caractérisé en ce que**
l'exécution du programme d'au moins l'un des au moins deux processeurs est bloquée par le signal respectif pour une durée pouvant être prédéfinie et/ou déterminée à partir de la comparaison d'adresses.

5. Procédé selon la revendication 1,
**caractérisé en ce que**
les accès en lecture et/ou en écriture à des adresses du moyen de mémoire pendant une exécution de programme d'au moins deux processeurs s'effectuent de façon asynchrone, donc à des moments quelconques.

6. Procédé selon les revendications 1 et 2,
**caractérisé en ce que**
l'exécution de programme de l'au moins un deuxième processeur est bloquée si l'accès en lecture et/ou en écriture du premier processeur a été détecté simultanément à la même adresse à l'aide de la comparaison d'adresses avant l'accès en lecture et/ou en écriture du deuxième processeur.

7. Dispositif de commande de processus dans un véhicule, comprenant au moins deux processeurs (105, 104) et au moins un moyen de mémoire (100), dans lequel au moins deux processeurs accèdent à au moins un moyen de mémoire, et un accès en lecture et/ou en écriture simultané des processeurs à la même adresse du moyen de mémoire est empêché pendant une exécution de programme,
**caractérisé en ce qu'**
il comprend des premiers moyens (119) qui reconnaissent la même adresse par comparaison d'adresses, et des deuxièmes moyens (118) qui, en fonction de la comparaison d'adresses, transmettent un premier signal au premier processeur et un deuxième signal au deuxième processeur et bloquent l'exécution du programme d'au moins l'un des processeurs par le signal respectif.
